# EUROPÄISCHE PATENTSCHRIFT

(11) **EP 1 814 709 B1**
(45) Veröffentlichungstag und Bekanntmachung des Hinweises auf die Patenterteilung: **16.03.2011**
(21) Anmeldenummer: 05801549.6
(22) Anmeldetag: 06.10.2005
(51) Int. Cl.: B29C 45/76

(54) **VERFAHREN ZUM BETREIBEN EINER SPRITZGUSSMASCHINE**
METHOD FOR THE OPERATION OF AN INJECTION MOLDING MACHINE
PROCEDE PERMETTANT DE FAIRE FONCTIONNER UNE MACHINE DE MOULAGE PAR INJECTION

(30) Priorität: 16.10.2004 DE 102004050445
(43) Veröffentlichungstag der Anmeldung: 08.08.2007
(73) Patentinhaber: KraussMaffei Technologies GmbH, 80997 München (DE)
(72) Erfinder: GRIMM, Günther, 86567 Hilgertshausen (DE)
(74) Vertreter: Wilhelm, Ludwig
(86) Internationale Anmeldenummer: PCT/EP2005/055075
(87) Internationale Veröffentlichungsnummer: WO 2006/040298

(56) Entgegenhaltungen:
- US-A1- 2002 066 971
- US-A1- 2004 051 194
- US-A1- 2004 080 067
- PATENT ABSTRACTS OF JAPAN Bd. 012, Nr. 078 (M-675), 11. März 1988 (1988-03-11) -& JP 62 218113 A (MITSUBISHI HEAVY IND LTD), 25. September 1987 (1987-09-25)

## Beschreibung

Die Erfindung betrifft ein Verfahren zum Betreiben einer Spritzgussmaschine, bei dem ein Sollgrößen-Verlauf für eine Werkzeugsicherung einer Spritzgussmaschine ermittelt wird und die Spritzgussmaschine basierend auf dem ermittelten Sollgröβen-Verlauf betrieben wird.

Bei einem bekannten Verfahren zum Erstellen eines Soll-Kraft-Verlaufes für die Schließkraft eines Formwerkzeuges, z.B. des Werkzeuges einer Spritzgussmaschine, wird während einer SollKraft-Ermittlungsphase am Ende des Schließprozesses eines Formwerkzeuges der Spritzgussmaschine ein ein- oder mehrstufiges Duckprofil vorgegeben. Bei der Ermittlung dieses Druckprofils wird manuell und empirisch vorgegangen, d.h., dass der Bediener der Spritzgussmaschine entlang eines Endbereiches der Werkzeugschließphase iterativ die Antriebskraft für eine bewegte Werkzeughälfte soweit verringert, bis die Antriebskraft idealerweise nur noch in der Lage ist, die Reibungsverluste in der Lagerung einer bewegten Werkzeughälfte zu überwinden. Aus dieser empirisch und manuell ermittelten minimalen Betätigungskraft wird ggf. durch Zugabe eines Offsetwertes ein SollKraft-Verlauf für den Endbreich der Werkzeugschließphase ermittelt. Wird nunmehr die Spritzgussmaschine in einer Betriebsphase zur Fertigung mit diesem so ermittelten SollKraft-Verlauf beaufschlagt, so resultiert hieraus eine Verfahrzeit, die die bewegte Werkzeughälfte für den Verfahrweg, der Werkzeugschließphase benötigt. In der Betriebsphase der Spritzgussmaschine wird diese Verfahrzeit bei jedem Schließen des Formwerkzeuges als Ist-Wert im Betrieb gemessen und mit er Soll-Verfahrzeit verglichen. Wird aus irgendeinem Störgrund, wie z.B. einem Sperrgegenstand zwischen den Werkzeughälften oder dergleichen die Werkzeugschließung behindert, so reicht die vorher eingestellte Soll-Schließkraft nicht mehr aus, um in der vorgegebenen Schließzeit das Werkzeug vollständig zusammenzuführen. Nach Überschreiten der Soll-Schließzeit wird davon ausgegangen, dass ein Störhindernis vorliegt und der Antrieb des Werkzeuges wird abgeschaltet. Hierdurch wird verhindert, dass eine Beschädigung des Formwerkzeuges und/oder eines Formteiles, welches sich fälschlicherweise noch zwischen den Formhälften befindet, erfolgt. Dieses Verfahren hat sich bewährt, ist jedoch für die Phase der Ermittlung des Soll-Kraft-Verlaufes umständlich und arbeitsintensiv, da eine interative, manuelle Annäherung an die minimale Fahrkraft erfolgen muss. Dies erfordert hohe Abstimmzeiten und einen erheblichen Erfahrungsschatz des Bedieners hinsichtlich der Erstauswahl des Kraftniveaus mit dem die Ermittlung begonnen wird. Hierfür ist ein erheblicher Schulungsaufwand erforderlich. Außerdem ist der Einrichtungsaufwand der Spritzgussmaschine, beispielsweise nach einem Werkzeugwechsel erheblich.

Weiterhin ist von Nachteil, dass Geschwindigkeits- und Wegverläufe entlang der Werkzeugschließbewegung einen Einfluss auf die erforderlichen Fahrkräfte haben, so dass die Ermittlung der Soll-Schließkraft bei einer Änderung dieser Parameter zu wiederholen ist und somit ein erheblicher Aufwand erzeugt wird. Geschieht dies nicht, können Fehlfunktionen der Werkzeugsicherung auftreten. Die Verfahren gemäß dem Stand der Technik sind zeitaufwändig und fehlerträchtig. Gleichermaßen nachteilig ist, dass eine Änderung der Geschwindigkeits- und/oder Wegverläufe des Werkzeugschließvorganges direkten Einfluss auf die Soll-Verfahrzeit hat und somit z.B. eine Änderung der gewünschten Taktzeit eine manuelle, empirische Neuermittlung der Werkzeugsicherungszeit, d.h. der Soll-Verfahrzeit notwendig macht. Geschieht dies nicht, sind Fehlfunktionen der Werkzeugsicherung möglich. Dies ist unerwünscht..

Aus der US2004/0080067A1 ist ein Verfahren zum Betrieben einer Spritzgieβmaschine bekannt, bei dem ein Referenz-Verlauf der Schlieβkraft in Abhängigkeit von der Position einer beweglichen Platte aufgenommen wird, wenn der Schlieβvorgang korrekt verläuft. Wenn im Betriebszustand der Spritzgieβmaschine die Schlieβkraft in einem Überwachungsabschnitt einen vorgegebenen Maximalwert überschreitet, wird auf das Vorliegen einer Fehlfunktion geschlossen und ein Alarm wird ausgelöst.

Aus der JP62218113 ist es bekannt, eine Beschädigung einer Spritzguβform dadurch zu verhindern, dass der Verlauf einer Soll-Geschwindigkeit für den Schlieβvorgang in der Weise korrigiert und optimiert wird, dass die beim Aufeinanderstossen der Formhälften auftretende Aufprallkraft mit der Aufprallkraft aus einer Messfahrt verglichen wird, wobei die Amplitude und die Dämpfungszeit der Aufprallkraft ausgewertet werden.

Aufgabe der Erfindung ist es, ein Verfahren zum Betreiben einer Werkzeugmaschine, insbesondere einer Spritzgussmaschine an zugeben, bei dem der Ermittlungsaufwand eine Sollgrößen-Verlaufes für die Betriebsphase der Spritzgussmaschine minimiert ist und/oder automatisiert erfolgt. Außerdem soll der erforderliche Schulungsaufwand und der Ausbildungsaufwand des bedienenden Personals verringert werden. Die Zeit zwischen einem Werkzeugwechsel und der Wiederinbetriebnahme einer Spritzgussmaschine mit einem an das neue Werkzeug angepassten Sollgrößen-Verlauf soll minimiert werden.

Erfindungsgemäß wird die Aufgabe mit einem Verfahren mit den Merkmalen des Anspruchs 1 gelöst. Vorteilhafte Ausführungsformen sind in den Unteransprüchen angegeben.

Das erfindungsgemäße Verfahren zum Betreiben einer Spritzgussmaschine gliedert sich in eine Sollgrößen-Ermittlungsphase, in der ein Sollgrößen-Verlauf entlang zumindest eines Abschnittes eines Werkzeugverfahrweges eines Formwerkzeugs ermittelt wird und in eine Betriebsphase, bei der die Spritzgussmaschine gemäß dem ermittelten Sollgrößen-Verlauf betrieben wird. Die Sollgrößen-Ermittlung in der Sollgrößen-Ermittlungsphase umfasst die Schritte der Vorgabe zumindest einer Ausgangsgröße für die Betätigung des Formwerkzeuges, eine Messfahrt, bei der das Formwerkzeug korrespondierend zum Vorgabe-Verlauf der Ausgangsgröße angetrieben wird, einem Mess- und Speichervorgang von zumindest einem resultierenden, von der Ausgangsgröße verschiedenen Wert der Sollgröße während der Messfahrt und einer Bildung eines Sollgrößen-Verlaufes entlang eines Verfahrwegabschnittes aus den gemessenen Werten de Sollgröße.

Bei diesem Verfahren ist von besonderem Vorteil, dass ein einfach wählbarer Verlauf der Ausgangsgröße korrespondierend zu einer Wunschschließbewegung des Werkzeuges vorgegeben werden kann und der für den Antrieb der Spritzgussmaschine in der Betriebsphase notwendige Sollgrößen-Verlauf automatisch durch die Steuerung der Maschine selbst ermittelt werden kann. Hierdurch entfällt das aufwändige iterativ manuelle Einrichten bzw. Einstellen der Antriebskräfte der Spritzgussmaschine für jeden Verfahrwegabschnitt. Als geeignete Ausgangsgröße hat sich beispielsweise ein Geschwindigkeitsprofil entlang des Öffnungs- und/oder Schließweges bewährt. Dieses Geschwindigkeitsprofil hängt im Wesentlichen von der gewünschten Taktzeit ab. Ist beispielsweise aufgrund einer konstruktiven Änderung des Werkzeuges eine Taktzeiterhöhung möglich oder erwünscht, so wird eine Geschwindigkeit des Geschwindigkeitsprofils abschnittsweise erhöht. Eine solche Änderung kann dann mit einer automatischen Messfahrt und einer anschließenden automatischen Bestimmung des Sollgrößen-Verlaufes in sehr kurzer Zeit die Grundlage für den weiteren Betrieb der Spritzgussmaschine sein.

Weiterhin ist vorteilhaft, dass der Verfahrwegabschnitt zumindest ein Teilabschnitt der Öffnungs- und/oder Schließbewegung eines Formwerkzeuges ist. Dieses Verfahrensmerkmal ist besonders dann vorteilhaft, wenn beispielsweise am Beginn einer Formwerkzeugbewegung eine Leerhub vorgesehen ist. Dieser muss nicht unbedingt entlang eines Sollgrößen-Verlaufes überfahren werden, sondern kann auch mit einer Maximalkraft, die lediglich durch die Antriebseinheit der Maschine begrenzt ist, überfahren werden.

Besonders vorteilhaft ist es jedoch, als Verfahrwegabschnitt die gesamte Öffnungs- und/oder Schließbewegung des Formwerkzeuges zugrundezulegen, da es bei modernen, sehr komplizierten Werkzeugen erforderlich sein kann, die gesamte Werkzeugbewegung zu überwachen.

Um Fehlauslösungen einer Alarmeinrichtung zu vermeiden, kann es sinnvoll sein, zum automatisch ermittelten Sollgrößen-Verlauf eine Toleranzgröße bzw. ein Toleranzband zu addieren oder ein solches von diesem zu subtrahieren.

Als geeignete Sollgrößen-Verläufe haben sich beispielsweise der Schließkraft- und/oder der Öffnungskraftverlauf sowie ein Zeitverlauf der Bewegung des Formwerkzeuges bewährt.

Weiterhin vorteilhaft ist, dass die gemessenen Werte der Sollgröße Wegpunkten bzw. Wegwerten des Verfahrwegabschnittes des Formwerkzeuges zugeordnet werden. Hierdurch gelingt eine exakte Abbildung des vorgegebenen Geschwindigkeitsprofils gemäß dem Wunsch des Bedieners.

Während der Betriebsphase wird der Antrieb der Werkzeugmaschine korrespondierend zum gebildeten Sollgrößen-Verlauf betätigt. Während eines jeden Hubes des Formwerkzeuges wird eine Zeitmessung über die Verfahrwegabschnitte durchgeführt. Die so ermittelten Ist-Zeitwerte werden mit der Soll-Verfahrzeit des zugehörigen Verfahrwegabschnittes verglichen. Beim Über- bzw. Unterschreiten eines Sollgrößen-Verlaufs, z.B. einer Soll-Verfahrzeit ggf. zuzüglich und/oder abzüglich eines Toleranzbandes, wird davon ausgegangen, dass es sich um eine Störung der Spritzgussmaschine handelt. Darauf hin wird der Antrieb ausgeschaltet und ggf. ein Alarm ausgelöst.

Zur Erhöhung der Genauigkeit ist es besonders vorteilhaft, die Verfahrwegabschnitte mit einem Raster in Unterabschnitte zu unterteilen. Zu jedem Unterabschnitt wird ein korrespondierender Unterzeitabschnitt ermittelt und gespeichert.

Gleichwohl können die Verfahrwegabschnitte auch charakteristische Abschnitte des Vorgabe-Verlaufes des Ausgangsparameters, z.B. Bereiche konstanter Verfahrgeschwindigkeit sein.

Im Folgenden wird die Erfindung anhand der Zeichnung beispielhaft näher erläutert. Es zeigen:
- Figur 1:: beispielhaft als Vorgabeverlauf ein Wunsch- /Sollgeschwindigkeitsprofil einer bewegten Werkzeug- hälfte eines Formwerkzeuges entlang des Werkzeugver- fahrweges;
- Figur 2:: ein Flussdiagramm, welches die Verfahrensschritte in- nerhalb einer Sollgrößen-Ermittlungsphase des erfin- dungsgemäßen Verfahrens zeigt und
- Figur 3:: ein Flussdiagramm, welches die Verfahrensschritte in der Betriebsphase des erfindungsgemäßen Verfahrens zeigt.

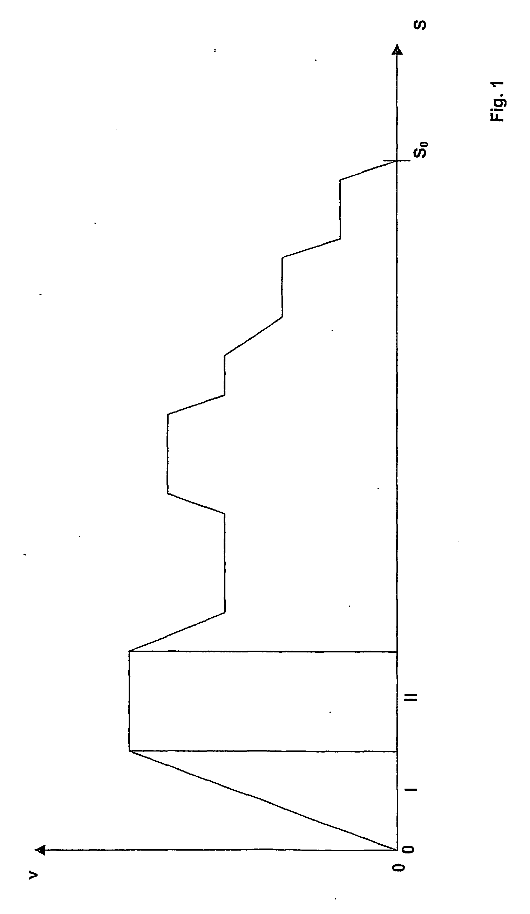

Figur 1 zeigt einen Vorlauf-Verlauf einer Ausgangsgröße, auf dessen Basis mit dem erfindungsgemäßen Verfahren automatisch ein Sollgrößen-Verlauf für die Auslösung einer Werkzeugsicherung eines Formwerkzeugs einer Spritzgussmaschine ermittelt wird. In Figur 1 ist ein Verlauf der Geschwindigkeit einer bewegten Formwerkzeughälfte über deren Schließweg bzw. Verfahrweg von 0 bis S₀ dargestellt. In einer Zone I steigt die Vorgabegeschwindigkeit und damit die Ausgangsgröße v auf eine Anfangsgeschwindigkeit an. In einer Zone II wird mit dieser Anfangsgeschwindigkeit die Formwerkzeughälfte konstant bewegt. In weiteren Zonen verläuft der Vorgabeverlauf der Ausgangsgröße v nach einem stufenförmigen Profil mit Abbrems- und Beschleunigungsphasen sowie mit Phasen konstanter Geschwindigkeit. Am Ende des Verfahrweges wird bei der Werkzeugschließung die Verfahrgeschwindigkeit des Formwerkzeuges selbstverständlich Null. Der Verlauf eines solchen Geschwindigkeitsprofiles mit verschiedenen Geschwindigkeiten v entlang des Verfahrweges von 0 bis S₀ ist einfach vorhersehbar bzw. vorhersagbar, da in Bereichen, in denen z.B. ein Leerhub stattfindet ohne weiteres maximale Geschwindigkeit gefahren werden kann und in Bereichen, in denen beispielsweise Schieber eingeklinkt und mitgenommen werden sollen, geringere Geschwindigkeiten gewünscht werden. Ein Bediener einer Spritzgussmaschine kann ohne großen Schulungsaufwand ein geeignetes Geschwindigkeitsprofil als Ausgangsgrößenverlauf, also den Vorgabe-Verlauf einer Ausgangsgröße einfach ermitteln und vorgeben.

Dieser Geschwindigkeitsverlauf, d.h. der Vorgabe-Verlauf der Ausgangsgröße v entlang des Verfahrweges der Formwerkzeughälfte kann von einer Maschinensteuerung ohne Weiteres abgefahren werden, sofern die Maschine über Geschwindigkeitsaufnehmer oder dergleichen geeignete Einrichtungen zur Bestimmung der Formwerkzeughälftengeschwindigkeit verfügt. Dabei ist es nicht notwendig, dass der Bediener Antriebskräfte, die zur Verwirklichung dieses Geschwindigkeitsprofils notwendig sind, umständlich und manuell ermitteln muss. Im Gegensatz zum Stand der Technik kommt es auch nicht mehr auf diejenige Antriebskraft an, die gerade ausreicht, um Reibungsverluste zu überwinden, sondern es ergeben sich die Kräfte, die in Abhängigkeit des Vorgabegeschwindigkeitsprofils, insbesondere für Beschleunigungs- und Abbremsphasen erforderlich sind, automatisch. Die Kräfte sind lediglich durch die Maximalkraft, die ein Antriebsaggregat der Spritzgussmaschine hervorbringen kann, begrenzt.

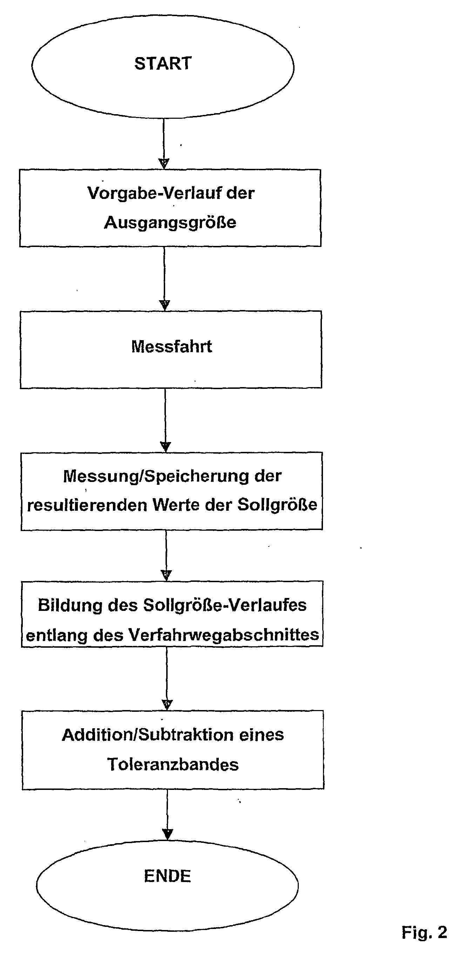

Im Folgenden werden anhand der Figur 2 die Verfahrensschritte innerhalb einer auf eine Sollgrößen-Ermittlungsphase des erfindungsgemäßen Verfahrens beschrieben.

Nachdem, wie im Zusammenhang mit Figur 1 erläutert, ein Vorgabegeschwindigkeitsverlauf durch den Bediener vorgegeben wurde, ist somit der erste Verfahrensschritt einer Sollgrößen-Ermittlungsphase des erfindungsgemäßen Betriebsverfahrens für eine Spritzgussmaschine abgeschlossen. Nach Abschluss dieses Verfahrensschrittes, wird das vorgegebene Geschwindigkeitsprofil in einer Messfahrt der Spritzgussmaschine, die mit dem Formwerkzeug erfolgt, einmal entlang der Schließrichtung und/oder entlang der Öffnungsrichtung abgefahren. Während der Messfahrt ist die Antriebskraft für die Bewegung der Formwerkzeughälfte lediglich durch die Leistungsfähigkeit des Antriebsaggregats der Spritzgussmaschine begrenzt. Während der Messfahrt werden fortlaufend oder getaktet eine resultierende, von der Ausgangsgröße verschiedene Werte der Sollgröße gemessen und die Werte als Sollgröße gespeichert. Die Messung einer geeigneten Sollgrößen, z.B. der Antriebskraft, die für einen bestimmten Verfahrwegabschnitt entlang des Geschwindigkeitsprofiles notwendig ist, erfolgt beispielsweise durch einen Druckaufnehmer im hydraulischen Antriebssystem der Spritzgussmaschine.

Eine weitere geeignete Größe, deren Werte bei der Messfahrt gemessen werden können, ist beispielsweise der Verfahrweg des Formwerkzeuges, wobei die jeweilige Position, die zu einem charakteristischen Bereich oder Punkt des Geschwindigkeitsvorgabeverlaufes (des Ausgangsparameterverlaufes) gehört mittels Wegaufnehmern entlang des Verfahrweges ermittelt wird. Die Speicherung der ermittelten Werte der Sollgröße erfolgt in üblichen Speichermedien.

In einem nächsten Verfahrensschritt wird aus den gemessenen und gespeicherten Werten der Sollgrößen die vorzugsweise in einer hohen Anzahl vorliegen, ein Sollgrößen-Verlauf entlang des Verfahrwegabschnittes und/oder des gesamten Verfahrweges der Formwerkzeughälfte gebildet, z.B. errechnet.

Als Ergebnis liegt nach diesem Verfahrensschritt somit ein Sollgrößen-Verlauf entlang eines Verfahrwegabschnittes und/oder entlang des gesamten Verfahrweges vor, der Grundlage für eine Betriebsphase der Spritzgussmaschine ist. Die Ermittlung dieses Sollgrößen-Verlaufes erfolgte beim erfindungsgemäßen Verfahren im Rahmen einer einzigen Messfahrt ohne iterative Näherungsschritte allein aufgrund einer einfach bestimmbaren und einfach eingebbaren Vorgabeverlaufskurve einer Ausgangsgröße.

Besonders vorteilhaft ist es, wie in Figur 2 dargestellt, dem automatisch ermittelten Sollgrößen-Verlauf entlang eines Verfahrwegabschnittes noch ein Toleranzband zu überlagern, so dass ein tolerierter Sollgrößen-Verlauf gebildet wird, der Grundlage für den weiteren Betrieb der Spritzgussmaschine ist. Als Breite des Toleranzbandes können entlang des Verfahrweges unterschiedliche Toleranzen verwendet werden, beispielsweise können in Beschleunigungs- und/oder Bremsphasen des Formwerkzeuges die Toleranzen etwas größer gewählt werden als im Bereich konstanter Verfahrgeschwindigkeit, da in Beschleunigungs- und/oder Bremsphasen Störungen der Betriebskräfte in größerem Maße auftreten können.

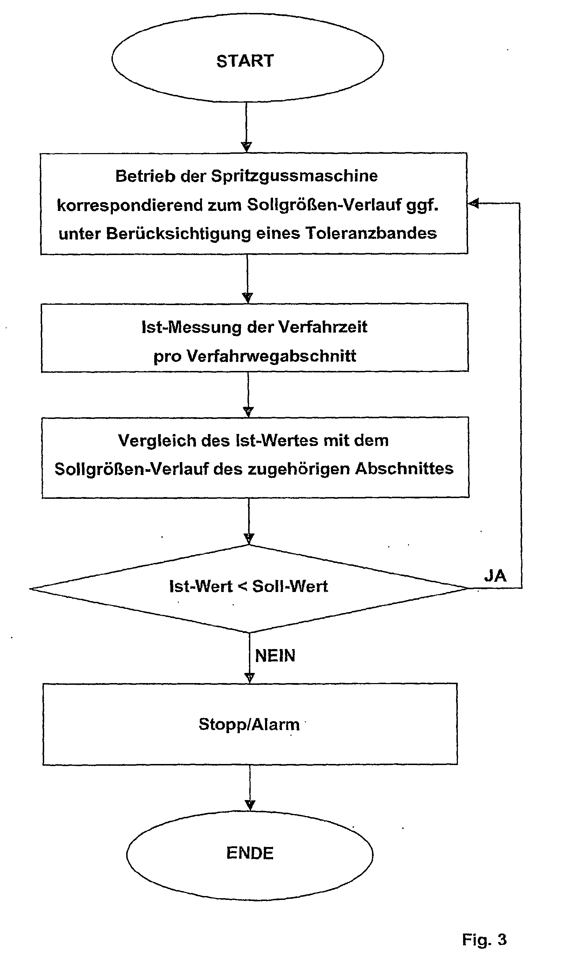

Nunmehr wird anhand der Figur 3, die eine Betriebsphase des erfindungsgemäßen Verfahrens erläutert.

Basierend auf dem in der Sollgrößen-Ermittlungsphase ermittelten Sollgrößen-Verlauf, der ggf. mit einem Toleranzband versehen ist, wird nunmehr in einer Betriebsphase die Spritzgussmaschine betrieben. Während eines jeden Produktionszyklusses der Spritzgussmaschine erfolgt eine Ist-Wert-Messung der Verfahrzeit oder der momentanen Antriebskraft für jeden Verfahrwegabschnitt. Ist der Sollgrößen-Verlauf ein Kraftverlauf, so wird selbstverständlich während des Betriebs der Spritzgussmaschine die Ist-Kraft gemessen. Ist der Sollverlauf ein Wegverlauf, so empfiehlt es sich während des Betriebs der Spritzgussmaschine als Ist-Größe den Verfahrweg zu messen.

Die gemessenen Ist-Werte werden mit dem in der Spritzgussmaschine hinterlegten Sollgrößen-Verlauf des entsprechenden Profilabschnittes verglichen. Sofern der im Betrieb gemessene Ist-Wert innerhalb des Toleranzbandes liegt oder unterhalb des Sollgrößen-Verlaufes in einem unkritischen Bereich liegt, so wird der Betrieb der Spritzgussmaschine fortgesetzt. Ist der gemessene Ist-Wert außerhalb des Toleranzbandes oder ist er größer oder kleiner als der entsprechende Wert des Sollgrößen-Verlaufes an dieser Stelle des Profils, so wird dies als Maschinenstörung interpretiert und der Antrieb der Maschine abgeschaltet, so dass eine Beschädigung des Formwerkzeuges vermieden ist. Ggf. kann zusätzlich zum Anhalten der Maschine ein Alarm in akustischer oder optischer Art und Weise ausgegeben werden.

## Patentansprüche

1. Verfahren zum Betreiben einer Spritzgussmaschine, wobei
- in einer Sollgrößen-Ermittlungsphase ein Sollgrößen-Verlauf für eine Werkzeugsicherung einer Spritzgussmaschine entlang zumindest eines Abschnittes eines Werkzeugverfahrweges eines Formwerkzeuges ermittelt wird und
- in einer darauf folgenden Betriebsphase die Spritzgussmaschine gemäß dem ermittelten Sollgrößen-Verlauf betrieben wird, wobei
- ein Vorgabe-Verlauf zumindest einer Ausgangsgröße vorgegeben wird,
- das Formwerkzeug in einer Messfahrt korrespondierend zum Vorgabe-Verlauf der Ausgangsgröße angetrieben wird,
- während der Messfahrt zuminderst ein resultierender Wert der Sollgröße gemessen und gespeichert wird und
- aus den gemessenen Werten der Sollgröße ein Sollgrößen-Verlauf entlang des Verfahrwegabschnittes gebildet wird, wobei
die Sollgröße eine von der Ausgangsgröße verschiedene Größe ist.

2. Verfahren nach Anspruch 1, **dadurch gekennzeichnet, dass** die Ausgangsgröße eine Geschwindigkeit eines Geschwindigkeitsprofils entlang des Verfahrwegabschnittes ist.

3. Verfahren nach Anspruch 1 oder 2, **dadurch gekennzeichnet, dass** der Verfahrwegabschnitt zumindest ein Teilabschnitt der Öffnungs- und/oder Schließbewegung eines Formwerkzeuges der Spritzgussmaschine ist.

4. Verfahren nach einem der vorhergehenden Ansprüche, **dadurch gekennzeichnet, dass** der Verfahrwegabschnitt die gesamte Öffnungs- und/oder Schließbewegung des Formwerkzeuges umfasst.

5. Verfahren nach einem der vorhergehenden Ansprüche, **dadurch gekennzeichnet, dass** zum Sollgrößen-Verlauf eine Toleranzgröße addiert oder von diesem subtrahiert wird.

6. Verfahren nach einem der vorhergehenden Ansprüche, **dadurch gekennzeichnet, dass** der Sollgrößen-Verlauf ein Schließkraft- und/oder Öffnungskraftverlauf ist.

7. Verfahren nach einem der vorhergehenden Ansprüche, **dadurch gekennzeichnet, dass** der Sollgrößen-Verlauf ein Zeitverlauf der Bewegung des Formwerkzeuges ist.

8. Verfahren nach einem der vorhergehenden Ansprüche, **dadurch gekennzeichnet, dass** der Vorgabe-Verlauf der Ausgangsgröße in Abhängigkeit einer gewünschten Taktzeit vorgegeben wird.

9. Verfahren nach einem der vorhergehenden Ansprüche, **dadurch gekennzeichnet, dass** während der Messfahrt die Spritzgussmaschine ohne Begrenzung der Antriebskraft, d.h. mit der maximal möglichen Antriebskraft der Spritzgussmaschine, betrieben wird.

10. Verfahren nach einem der vorhergehenden Ansprüche, **dadurch gekennzeichnet, dass** die gemeinsamen Werte der Sollgrößen-Wegpunkten bzw. Wegwerten des Verfahrwegabschnittes des Formwerkzeugs zugeordnet werden.

11. Verfahren nach einem der vorhergehenden Ansprüche, **dadurch gekennzeichnet, dass** in der Betriebsphase der Antrieb der Spritzgussmaschine korrespondierend zum Sollgrößen-Verlauf erfolgt.

12. Verfahren nach einem der vorhergehenden Ansprüche, **dadurch gekennzeichnet, dass** in der Betriebsphase der Spritzgussmaschine eine Zeitmessung über die Verfahrwegabschnitte durchgeführt wird und eine so ermittelte Ist-Zeit mit der Soll-Verfahr-Zeit des zugehörigen Verfahrwegabschnittes verglichen wird.

13. Verfahren nach Anspruch 12 **dadurch gekennzeichnet, dass** beim Über-/Unterschreiten der Soll-Verfahrzeit oder beim Über-/Unterschreiten der Soll-Verfahrzeit zzgl. einer Toleranzzeit der Antrieb der Spritzgussmaschine abgeschaltet wird.

14. Verfahren nach Anspuch 13, **dadurch gekennzeichnet, dass** mit dem Abschalten der Spritzgussmaschine ein Alarm oder eine Fehlfunktionsanzeige ausgegeben wird.

15. Verfahren nach einem der vorhergehenden Ansprüche, **dadurch gekennzeichnet, dass** Fahrzeitabschnitte zu zugehörigen Verfahrwegabschnitten ermittelt und gespeichert werden.

16. Verfahren nach einem der vorhergehenden Ansprüche, **dadurch gekennzeichnet, dass** die Verfahrwegabschnitte charakteristischen Abschnitte des Vorgabe-Verlaufs der Ausgangsgröße entsprechen.

17. Verfahren nach einem der vorhergehenden Ansprüche, **dadurch gekennzeichnet, dass** die Verfahrwegabschnitte mittels eines Rasters in Unterabschnitte unterteilt werden und zu jedem Unterabschnitt ein korrespondierender Unterzeitabschnitt ermittelt und gespeichert wird.

## Claims

1. Method for operating an injection moulding machine, wherein
- in a desired variable determination phase a desired variable course is determined for a tool securing of an injection moulding machine along at least one section of a tool travel path of a moulding tool and
- in a subsequent operating phase the injection moulding machine is operated according to the determined desired variable course, wherein
- a default course of at least one initial variable is specified,
- the moulding tool is driven in a test run corresponding to the default course of the initial variable,
- during the test run at least one resulting value of the desired variable is measured and stored and
- from the measured values of the desired variable a desired variable course is formed along the travel path section, wherein
- the desired variable is a different variable from the initial variable.

2. Method according to Claim 1, **characterized in that** the initial variable is a speed of a speed profile along the travel path section.

3. Method according to Claim 1 or 2, **characterized in that** the travel path section is at least a partial section of the opening and/or closing movement of a moulding tool of the injection moulding machine.

4. Method according to one of the preceding claims, **characterized in that** the travel path section comprises the entire opening and/or closing movement of the moulding tool.

5. Method according to one of the preceding claims, **characterized in that** a tolerance variable is added to or subtracted from the desired variable course.

6. Method according to one of the preceding claims, **characterized in that** the desired variable course is a closing force course and/or an opening force course.

7. Method according to one of the preceding claims, **characterized in that** the desired variable course is a time course of the movement of the moulding tool.

8. Method according to one of the preceding claims, **characterized in that** the default course of the initial variable is predetermined as a function of a desired cycle time.

9. Method according to one of the preceding claims, **characterized in that** during the test run the injection moulding machine is operated without limiting the driving force, i.e. with the maximum possible driving force of the injection moulding machine.

10. Method according to one of the preceding claims, **characterized in that** the common values are associated with the desired variable path points or path values of the travel path section of the moulding tool.

11. Method according to one of the preceding claims, **characterized in that** in the operating phase the drive of the injection moulding machine takes place corresponding to the desired variable course.

12. Method according to one of the preceding claims, **characterized in that** in the operating phase of the injection moulding machine a time measurement is carried out over the travel path sections and an actual time which is thus determined is compared with the desired travel time of the associated travel path section.

13. Method according to Claim 12, **characterized in that** on exceeding/falling below the desired travel time or on exceeding/falling below the desired travel time plus a tolerance time, the drive of the injection moulding machine is switched off.

14. Method according to Claim 13, **characterized in that** with the switching off of the injection moulding machine, an alarm or a malfunction indication is emitted.

15. Method according to one of the preceding claims, **characterized in that** travel time sections to associated travel path sections are determined and stored.

16. Method according to one of the preceding claims, **characterized in that** the travel path sections correspond to characteristic sections of the default course of the initial variable.

17. Method according to one of the preceding claims, **characterized in that** the travel path sections are subdivided by means of a raster into sub-sections, and to each sub-section a corresponding sub-time section is determined and stored.

## Revendications

1. Procédé permettant de faire fonctionner une machine de moulage par injection, dans lequel
- au cours d'une phase de calcul de grandeurs nominales, un tracé de grandeurs nominales pour une sécurité d'outil d'une machine-outil est calculé le long au moins d'un tronçon d'un parcours d'outil d'une filière et
- au cours d'une phase de fonctionnement successive, on fait fonctionner la machine de moulage par injection conformément au tracé de grandeurs nominales calculé,
- sachant qu'un tracé de consigne d'au moins une grandeur de départ est donné,
- que la filière est entraînée dans un trajet de mesure correspondant au tracé de consigne de la grandeur de départ,
- pendant le trajet de mesure, au moins une valeur résultante de la grandeur nominale est mesurée et enregistrée et
- un tracé de grandeurs nominales le long du tronçon de parcours est formé à partir des valeurs mesurées de la grandeur nominale, sachant que
- la grandeur nominale est une grandeur différente de la grandeur de départ.

2. Procédé selon la revendication 1, **caractérisé en ce que** la grandeur de départ est une vitesse d'un profil de vitesse le long du tronçon de parcours.

3. Procédé selon la revendication 1 ou 2, **caractérisé en ce que** le tronçon de parcours est au moins un tronçon partiel du mouvement d'ouverture et/ou de fermeture d'une filière de la machine de moulage par injection.

4. Procédé selon l'une des revendications précédentes, **caractérisé en ce que** le tronçon de parcours comprend l'ensemble du mouvement d'ouverture et/ou de fermeture de la filière.

5. Procédé selon l'une des revendications précédentes, **caractérisé en ce qu'**une grandeur de tolérance est ajoutée au tracé de grandeurs nominales ou soustraite de celui-ci.

6. Procédé selon l'une des revendications précédentes, **caractérisé en ce que** le tracé de grandeurs nominales est un tracé de force de fermeture et/ou de force d'ouverture.

7. Procédé selon l'une des revendications précédentes, **caractérisé en ce que** le tracé de grandeurs nominales est un cadencement du mouvement de la filière.

8. Procédé selon l'une des revendications précédentes, **caractérisé en ce que** le tracé de consigne de la grandeur de départ est donné en fonction d'un temps d'horloge souhaité.

9. Procédé selon l'une des revendications précédentes, **caractérisé en ce que** pendant le trajet de mesure, on fait fonctionner la machine de moulage par injection sans limitation de la force d'entraînement, c'est-à-dire avec la force d'entraînement maximale possible de la machine de moulage par injection.

10. Procédé selon l'une des revendications précédentes, **caractérisé en ce que** les valeurs communes des points de cheminement sont attribuées aux grandeurs nominales, respectivement aux valeurs de cheminement du tronçon de parcours de la filière.

11. Procédé selon l'une des revendications précédentes, **caractérisé en ce qu'**au cours de la phase de fonctionnement, l'entraînement de la machine de moulage par injection a lieu en correspondance avec le tracé de grandeurs nominales.

12. Procédé selon l'une des revendications précédentes, **caractérisé en ce qu'**au cours de la phase de fonctionnement de la machine de moulage par injection, un chronométrage est effectué sur les tronçons de parcours et un temps réel ainsi obtenu est comparé au temps de parcours nominal du tronçon de parcours correspondant.

13. Procédé selon la revendication 12, **caractérisé en ce que** lorsque l'on est au-dessus ou en-dessous du temps de parcours nominal ou lorsque l'on est au-dessus ou en-dessous du temps de parcours nominal plus un temps de tolérance, l'entraînement de la machine de moulage par injection est arrêté.

14. Procédé selon la revendication 13, **caractérisé en ce qu'**une alarme ou un message de dysfonctionnement est émis(e) avec l'arrêt de la machine de moulage par injection.

15. Procédé selon l'une des revendications précédentes, **caractérisé en ce que** des tronçons de durée de parcours sont calculés et enregistrés pour des tronçons de parcours correspondants.

16. Procédé selon l'une des revendications précédentes, **caractérisé en ce que** les tronçons de parcours correspondent à des tronçons caractéristiques du tracé de consigne de la grandeur de départ.

17. Procédé selon l'une des revendications précédentes, **caractérisé en ce que** les tronçons de parcours sont divisés en sous-tronçons au moyen d'une grille et que pour chaque sous-tronçon, un sous-tronçon de durée correspondant est calculé et enregistré.
